# EUROPÄISCHE PATENTSCHRIFT

(11) **EP 0 334 178 B1**
(45) Veröffentlichungstag und Bekanntmachung des Hinweises auf die Patenterteilung: **29.01.1997**
(21) Anmeldenummer: 89104533.8
(22) Anmeldetag: 14.03.1989
(51) Int. Cl.: B32B 5/20, B29C 44/00, B60R 13/08

(54) **Aufbau zur Schallisolation, Verfahren zu seiner Herstellung und seine Verwendung**
Sound-insulating assembly, its use and method of making it
Dispositif d'insonorisation, procédé de fabrication et utilisation

(30) Priorität: 24.03.1988 DE 3809980
(43) Veröffentlichungstag der Anmeldung: 27.09.1989
(73) Patentinhaber: Stankiewicz GmbH, D-29352 Adelheidsdorf (DE)
(72) Erfinder: Burak, Gerhard, D-3101 Adelheidsdorf (DE); Kittel, Christoph, D-3101 Nienhagen (DE); Hoffmann, Manfred, D-3101 Nienhof (DE); Walendy, Hans, D-3101 Wathlingen (DE)
(74) Vertreter: Melzer, Wolfgang, Dipl.-Ing.

(56) Entgegenhaltungen:
- DE-A- 2 557 719
- DE-A- 3 043 044
- DE-A- 3 104 835
- DE-A- 3 151 296
- US-A- 4 199 634

## Beschreibung

Die Erfindung betrifft ein Verfahren zur Herstellung eines Aufbaues zur Schallisolation gemäß dem Oberbegriff des Anspruches 1, einen Aufbau zur Schallisolation sowie dessen Verwendung.

Aus der DE-A-25 57 719 ist ein Kraftfahrzeugteppichzuschnitt und ein Verfahren zu dessen Herstellung bekannt. Der Zuschnitt besteht aus einem dem Bodenblech eines Fahrzeuges angepaßten Formteil aus Schaumkunststoff, wobei wesentlich ist, daß er an einen Teppich (als Dekorabdeckung) angeschäumt ist. Um zu vermeiden, daß durch den Teppich hindurchgeschäumt wird, ist zwischen dem Schaumkunststoff und dem Teppich eine saugfähige mit der Teppichrückseite und dem Schaum fest verbundene Folie als sogenannte Schaumbremse vorgesehen. Für diese Schaumbremse wird ein saugfähiges Vliespapier mit einem Gewicht von ca. 50 - 120 g/m² verwendet, vorzugsweise mit 80 g/m². Das Vlies kann aus Natur- oder Synthetikfasern bestehen. Es kann mit dem Teppich mechanisch verbunden bzw. verliebt sein. Wesentlich ist somit, daß bei mit Teppichen zu verbindenden Schaumkunststoffen die Teppichoberseite von sogenanntem Durchschäumen freizuhalten ist, da diese zu irreparablen Verschmutzungen der Teppichoberseite führen würden, wodurch das gesamte Teil nicht mehr brauchbar wäre. Somit kann dann, wenn der Teppich selbst ausreichend schaumdicht ist, auf eine Vlieseinlage verzichtet werden.

Eine derartige Schaumbremse ist auch aus der DE-A1-31 04 835 bekannt. Dabei ist das textile Flächengebilde mit einer Trägerschicht aus offenzelligem Kunststoff mit geringem Porenvolumen versehen und erfolgt die Hinterschäumung auf diese Trägerschicht derart, daß durch Eindringen in die Trägerschicht eine feste Verbindung erzielt wird. Das Aufbringen der Hinterschäumung erfolgt dort konturgenau in einer geschlossenen Form, wobei die Entlüftung durch die Trägerschicht erfolgt. Neben einer optimalen Wirkung soll auch eine Geräuschdämpfung bewirkt werden. Diese Flächenverkleidung ist zweckmäßig als Formteil ausgebildet und insbesondere beim Einsatz in Personenkraftwagen mit Teppichabdeckungen versehen, so daß insgesamt ein Teppich-Kompakt-Isolationsteil entsteht.

Zur Verbesserung des akustischen Komforts ist es bekannt, sogenannte Masse-Feder-Systeme zu verwenden (vgl. DE-A2-20 06 741). Die zu bedämpfende Fläche wird mit mehreren Schichten belegt, deren eine eine Weichschaumschicht(als akustische Feder) und deren andere eine Schicht hoher Masse (akustische Schwerschicht) ist. Nach dem Stand der Technik werden diese beiden Schichten unabhängig voneinander gefertigt und mit einer Dekorabdeckung versehen. Die Verbindung erfolgt nach dem Stand der Technik durch Verlieben.

Im Zuge der Materialoptimierung und Masse-(Gewichts-)Erleichterung bei Schallisolationen für Fahrzeuge, insbesondere Personenkraftwagen, sind zahlreiche Vorschläge unterbreitet worden, wie trotz vermindertem Einsatz an Isolationsmaterialien mindestens der gleiche Geräuschkomfort im Fahrzeug erhalten werden kann. Das Einsparungspotential ist wesentlich durch die Schwerschicht gegeben, so daß die Versuche verstärkt auf Reduzierungen dieser Schwerschicht hinauslaufen. Es hat sich jedoch erwiesen, daß eine physikalisch gegebene untere Grenze existiert, unterhalb der ein Verhalten wie bei einem konventionellen Feder-Masse-System nicht mehr herbeigeführt werden kann. Bei Unterschreitung dieser Flächenmasse tritt also ein Verlust an Geräuschkomfort in jedem Fall ein. Gemäß früherem Stand der Technik (DE-AS 20 06 741) wurde die untere Grenze der Flächenmasse mit etwa 4 bis 5 kgm⁻² angegeben, während heute eine weitere Reduzierung bis auf etwa 2 kgm⁻² vertretbar ist. Dies ist allerdings nur dann möglich, wenn die zwangsläufig eintretende Verschlechterung durch Verminderung der Flächenmasse mit Hilfe akustisch stark verbesserter Schaumqualitäten aufgefangen werden kann. Hierzu wurden z.B. sogenannte viscoelastische Schäume entwickelt, wie sie in GAHLAU, H., Fortschrittliche Schallisolationen für Automobile, Stankiewicz-Information Nr. 130, Dr. Alois Stankiewicz GmbH, 1987, beschrieben sind.

Nach dem Stand der Technik ist es aber in allen Fällen erforderlich, die Schwerschicht und die Feder gesondert herzustellen und mit der Dekorabdeckung, im Regelfall einem Teppich, zu kombinieren.

Der Erfindung liegt daher die Aufgabe zugrunde, ein Verfahren zur Herstellung eines Aufbaus zur Schallisolation der eingangs geschildert Art so weiterzubilden, daß bei leichtem und kostengünstigem Aufbau der erwünschte Geräuschkomfort erreichbar ist. Ferner soll ein Aufbau zur Schallisolation, der nach diesem Verfahren herstellbar ist, zur Verfügung gestellt werden.

Die Erfindung geht von der Erkenntnis aus, daß dies erreichbar ist, wenn die sonst separat zu erzeugende und zu verarbeitende Schwerschicht in einem Arbeitsgang beim Hinterschäumen des verformten Teppichs im Werkzeug erzeugt werden kann.

Die Aufgabe wird bei dem Verfahren durch die kennzeichnenden Merkmale des Anspruchs 1 gelöst. Ein Aufbau zur Schallisolation ist im Anspruch 12 beschrieben.

Die Erfindung wird durch die Merkmale der Unteransprüche weitergebildet. Besondere Verwendungen sind in den Ansprüchen 25 bis 31 angegeben.

Der erfindungsgemäß zum Hinterschäumen verwendete Schaumstoff auf insbesondere Polyurethan-Zweikomponentenbasis führt im Werkzeug bei derselben chemischen Zusammensetzung zu Schichten mit sehr unterschiedlichen Merkmalen, nämlich einem zellenhaltigen Weichschaumstoff und einer zellenlosen oder zellenarmen verfestigten Schicht. Erfindungsgemäß entsteht also in einem Schritt ein Isolationsaufbau aus einem Weichschaumstoff als Feder und einer sich anschließenden verfestigten Schicht als Schwerschicht, der die mit dem verformten Teppich ein einheitliches Ganzes bildet.

Von Bedeutung ist daher, daß die Flächenmasse dser verfestigten Schicht leichtgewichtiger als die leichteste Schwerschicht gemäß dem erwähnten Stand der Technik ausgebildet sein kann, wobei die Auswirkungen auf die akustische Qualität gering sind.

Der wesentliche Vorteil der erfindungsgemäßen Ausgestaltung besteht darauf, daß die verfestigte Schicht durch Einbringen eines Vlieses oder offenporigen Schaumstoffes, die am Teppichrücken befestigt sind, sozusagen mit Hilfe eines Katalysators, erzeugt wird. Durch die lockere Struktur der Fasern des Vlieses bzw. des offenporigen Schnittschaumes dringt der flüssige Schaum während des Schäumungsprozesses in diese ein, wobei die Zellenbildung des Schaumes in diesem Bereich verhindert oder zumindest stark beeinträchtigt wird. Das an sich schäumende Material fällt quasi in sich zusammen und bildet eine nahezug kompakte, verfestigte Schicht. Der verbleibende Rest des zugeführten Flüssigmaterials bildet - wie sonst auch - seine Zellen aus und füllt den gesamten verbleibenden Raum der Form aus. Der Übergang zwischen diesen beiden Schichten erfolgt zwar kontinuierlich, jedoch über einen sehr kleinen Dikkenbereich des Gesamtaufbaus, so daß die beiden Schichten deutlich unterschieden werden können.

Nachfolgend wird die Erfindung unter Bezugnahme auf ein Ausführungsbeispiel anhand der Figuren näher erläutert. Es zeigt
- Fig. 1: einen Schnitt durch einen hinterschäumten Aufbau zur Schallisolation gemäß der Erfindung;
- Fig. 2: den Verlauf der Schalldämmung als Funktion der Frequenz für ein erstes System gemäß Figur 1 (Kurve 1) im Vergleich zu dem konventionellen System (Kurve 2);
- Fig. 3: den Verlauf der Schalldämmung als Funktion der Frequenz für ein zweites System gemäß Figur 1 (Kurve 1) im Vergleich mit dem konventionellen System (Kurve 2).

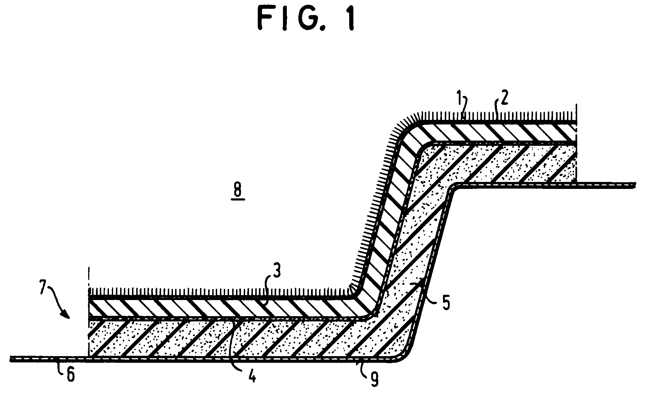

Bezugnehmend auf Figur 1 besteht ein erfindungsgemäß hergestellter Aufbau 7 zur Schallisolation in einer möglichen Ausführungsform aus folgenden Schichten (von einem zu dämmenden Raum 8 aus gesehen): Einer verformten Teppichschicht 1 mit schaumdichter Folie 2, einer, vorzugsweise biegeweichen, verfestigten Schwerschicht 3, einer gegebenenfalls danach angeordneten und/oder dünneren schaumdurchlässigen Vliesabdeckung 4, und einer dickeren elastischen Weichschaumstoffschicht 5. Ein solcher Aufbau kann auf das Blech 6 eines Fahrzeuges lose aufgelegt werden. Da jedoch diese bisher übliche lose Kopplung zwischen Aufbau 7 und Blech 6 nicht ausreicht, um nennenswerte Verlustfaktoren im Stirnwand-Bodenbereich zu erzielen, und andererseits die Verwendung von Klebern der Montage großer kompakter Isolationsteile abträglich ist, da dann die Montage unter Serienbedingungen am Band praktisch nicht möglich ist, wird gemäß einer Weiterbildung durch eine adhäsive Beschichtung 9 der Weichschaumstoffschicht 5 eine kraftschlüssige Verbindung zwischen dem Aufbau 7 und dem Blech 6 erreicht, ohne daß die fertigungstechnischen Nachteile einer festen Verklebung in Kauf genommen werden müßten. Durch diese Ankopplung gelingt es, die Körperschalldämpfung in dem durch das Isolationsteil überdeckten Bereich wesentlich zu erhöhen.

Der Teppich 1 dient als Dekor und bildet den äußeren Abschluß zum Fahrgastraum 8. Im Rahmen einer Versuchsreihe sind die physikalischen Kenndaten der erfindungsgemäß entstandenen Systeme verglichen worden mit denen von Feder-Masse-Systemen konventioneller Art, bei denen also die Schwerschicht separat erzeugt und nach Verbindung mit dem Teppich durch eine Kaschierpresse anschließend verformt wurde. Die Dicke der Aufbauten betrug etwa 22 bis 26 mm mit einer Flächenmasse der Schwerschicht im konventionellen System von 2000 gm⁻² zuzüglich einer für alle untersuchten Systeme gleichbleibenden Flächenmasse des Teppichs von im Mittel 885 gm⁻². Die Einwaage an Polyurethanmischung zum Erzeugen der Schäume betrug in allen Fällen 1,6 kg. Im geschlossenen Werkzeug ergab sich beim konventionellen System eine Dichte des Schaums von 88 kgm⁻³.

Bei einem Aufbau 7 der erfindungsgemäßen Art, der als ambivalentes Isolationssystem bezeichnet werden kann, wurde als Bindemittel ein verfestigtes Vlies aus Polyester mit einer Flächenmasse von 200 gm⁻² und einer unteren schaumdurchlässigen Vliesabdeckung verwendet. Die Flächenmasse der verfestigten Schicht und des Teppichs konnte dabei auf 1710 gm⁻² vermindert werden, also um 37 %, wobei die Flächenmasse der verfestigten Schicht 812 gm⁻² betrug. Die Dichte des Weichschaumes ergab sich zu 74 kgm⁻³.

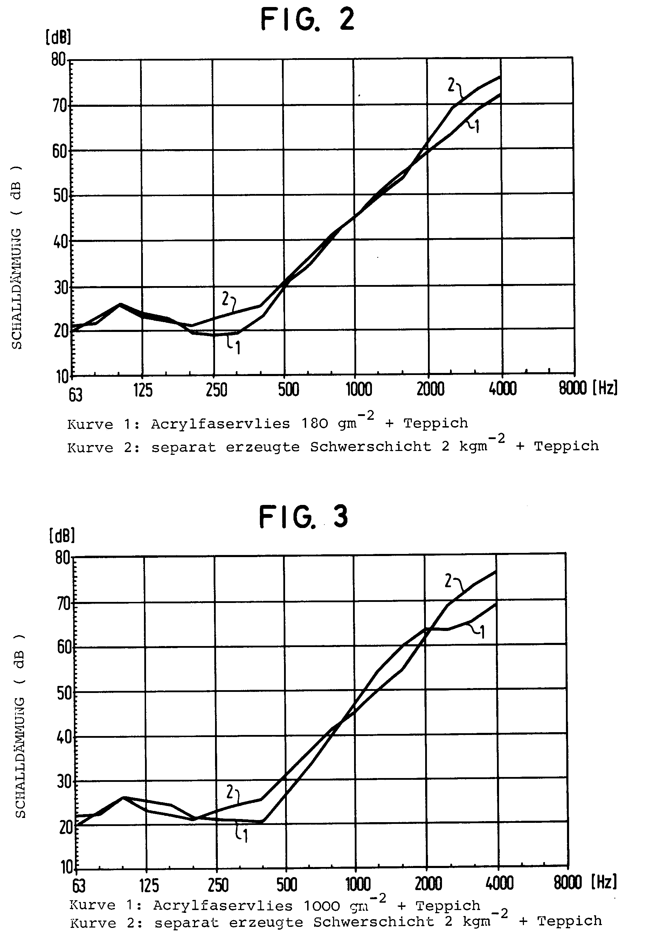

In einem weiteren Versuch (Fig. 3) wurde zur erfindungsgemäßen Herstellung der verfestigten Schicht Acrylfaservlies mit einer Flächenmasse von 1000 gm⁻² benutzt, was zu einer Schaumdichte von 75 kgm⁻³ führte, also gegenüber dem konventioneller Muster zu einer Verminderung um 15 % führte. Die Flächenmasse der Schwerschicht einschließlich Teppich betrug nun 1950 gm⁻², also vermindert um 32 % gegenüber dem konventionellen System. Für die verfestigte Schicht ergab sich eine Flächenmasse von 1065 gm⁻².

Für einen vorerst abschließenden Versuch (Fig. 2) kam ein Acrylfaservlies mit einer Flächenmasse von ca. 180 gm⁻² zum Einsatz. Die Dichte des Schaumes ergab sich zu 53 kgm⁻³, d.h., es stellte sich eine Verminderung um 40 % gegenüber dem konventionellen System ein. Die Flächenmasse der verfestigten Schicht (Schwerschicht) einschließlich Teppich ergab sich zu 1710 gm⁻², gleichbedeutend mit einer Verminderung um 40 % gegenüber dem konventionellen System. Die Flächenmasse der verfestigten Schicht betrug nur 825 gm⁻².

In den bisher durchgeführten Versuchen (Fig. 3, Fig. 2) war es also gelungen, die Massen des ambivalenten Isolationssystems bei gleicher Einsatzmenge Schaum und gleicher Flächenmasse Teppich gegenüber einem konventionellen System erheblich zu reduzieren.

Die wesentliche Bedeutung des erfindungsgemäßen Aufbaus besteht also darin, trotz verminderter Einsatzmassen (Gewicht) zu einem gleichwertigen Geräuschkomfort im Fahrzeug zu kommen. Diesbezüglich wurde zur Abschätzung der Erreichbarkeit dieses Zieles auf konventionelle Feder-Masse-Systeme, bei denen also die Schwerschicht separat erzeugt wurde, zurückgegriffen, die in Anlehnung an DIN 52 210 im bauakustischen Prüfstand gemessen worden sind. Im Vergleich dazu wurde der erfindungsgemäße Aufbau gemessen. Der Verlauf der Schalldämmung als Funktion der Frequenz ist in den Figuren 2 und 3 dargestellt. Somit ermöglichen die Ergebnisse nach den Kurven 1 und 2 jeweils einen Vergleich mit dem konventionellen System. Es zeigt sich, daß trotz erheblich reduzierter Massen durch den andersartigen, offensichtlich akustisch günstigeren Aufbau des ambivalenten Isolationssystems (Kurve 1) etwa gleiches Verhalten wie bei dem konventionellen System (Kurve 2) erreicht wird. Lediglich im Frequenzbereich zwischen 200 und 400 Hz sind negative Abweichungen zu beobachten, wobei davon ausgegangen werden kann, daß diese durch optimierte Schaumqualitäten behoben werden können. Insbesondere muß der Verlustfaktor des Schaumes noch weiter bis auf etwa 0,6 angehoben werden und gegebenfalls kann das System adhäsiv gemäß DE-OS35 10 932 eingestellt werden. Weitere Verbesserungen sind durch den Einsatz entkoppelter Schichten zu erwarten, wie sie im Prinzip in der DE-OS 36 24 427 beschrieben sind.

Die durchgeführten Versuche (s. Fig. 2 und Fig. 3) ergaben überraschend, daß ferner die Formstabilität der ambivalenten Isolationssysteme erheblich besser als die konventioneller System ist. Dies wird durch die erhöhte Steifigkeit der verfestigten Schicht gegenüber der eher biegeweichen Ausführung der Schwerschicht im konventionellen System herbeigeführt. In diesem Zusammenhang ist weiterhin überraschend, daß trotz der erhöhten Steifigkeit der verfestigten Schicht 3 mit Teppich 1 akustische Gleichwertigkeit mit dem konventionellen System herbeigeführt werden kann. Eine mögliche Erklärung ist der stark verminderte dynamische Elastizitätsmodul der Weichschaumschicht, wie sie im ambivalenten Isolationssystem durch das besondere Herstellverfahren erzeugt wird. Z.B. wurde der Elastizitätsmodul bei der für die Versuche verwendeten Schaummischung je nach vorliegendem Aufbau des ambivalenten Isolationssystems gegenüber einem konventionellen System um den Faktor 4 bis 8 reduziert. Der Verlustfaktor blieb dabei unverändert.

Das Herstellen der erfindungsgemäßen ambivalenten Isolationssysteme geschieht vorteilhaft dadurch, daß der Teppich 1 mit einem Acrylfaservlies, einem verfestigten Polyesterfaservlies oder einem Polyethylenvlies als Vliesabdeckung 4, ggfls. mit einer entsprechenden, zum Teppich 1 zeigenden schaumdichten Folienkaschierung 2, versehen und anschließend unter eine Kaschierpresse gebracht wird. Teppich 1 und Vliesabdeckung 4 können dabei als Bahnenware kontinuierlich verarbeitet werden. Nach dem Erwärmen in der Kaschierpresse wird dieser Verbund in das Verformwerkzeug eingefahren und bis auf eine Objekttemperatur von etwa 160 bis 165°C aufgeheizt. Die Weiterverarbeitung durch Hinterschäumung erfolgt dann in üblicher Weise. Der besondere Aufbau der erfindungsgemäßen "Ambivalenten Isolationssysteme" führt wegen verkürzter Aufheizzeiten auch zu kürzeren Taktzeiten bei der Großserienproduktion von Teppich-Kompakt-Isolationen.

Zusätzlich zu dem oben beschriebenen Verfahren können die Vliese und/oder Schnittschäume auch in Zuschnitten an akustisch besonders exponierten Stellen am Teppichrücken befestigt werden. Hierdurch lassen sich über die Fläche des Isolationsteils gesehen unterschiedlich akustische Eigenschaften erzeugen.

Eine vom Teppich 1 beabstandete gesonderte schaumdurchlässige dünne Vliesabdeckung 4 ist insbesondere dann zweckmäßig, wenn durch diese Schnittschäume und/oder Vliese gegen die Rückseite des Teppichs 1 bzw. schaumdichte Folienabdeckung 2 zu halten sind, um eine Verarbeitung - etwa durch eine Kaschierpresse - zu ermöglichen.

Auf die schaumdichte Folienabdeckung 2 kann dann verzichtet werden, wenn der Teppich 1 selbst schaumdicht ist, da es lediglich darauf ankommt, daß beim Hinterschäumen kein Schaum durch den Teppich 1 zu dessen Vorderseite (Sichtseite) dringt.

## Patentansprüche

1. Verfahren zur Herstellung eines Aufbaus (7) zur Schallisolation, bei dem man ein Halbzeug, bestehend aus einer Dekorabdeckung (1), die entweder selbst schaumdicht ist oder unmittelbar an ihrer Rückseite mit einer schaumdichten Folienkaschierung (2) versehen ist, in einem Werkzeug mit Kunststoff hinterschaumt,
dadurch **gekennzeichnet,**
daß man die Dekorabdeckung (1), wenn sie schaumdicht ist, beziehungsweise die schaumdichte Folienkaschierung (2) der Dekorabdeckung (1) rückseitig mit strukturierten Materialien versieht, und
daß man dann in einem einzigen Arbeitsgang zur Bildung einer zellenlosen oder zellenarmen verfestigten Schicht (3) aus Kunststoff zur Bildung einer akustischen Schwerschicht in die strukturierten Materialien und zur Bildung einer sich daran anschließenden zellenhaltigen elastischen Weichschaumstoffschicht (5) aus Kunststoff zur Bildung einer akustischen Feder in eine geschlossene Form hineinschäumt, wobei zur Erzeugung sowohl der verfestigten Schicht (3) als auch der elastischen Weichschaumstoffschicht (5) ein Kunststoff mit der selben chemischen Zusammensetzung verwendet wird,
wobei der gebildete elastische Schaumstoff einen Verlustfaktor von mindestens 0,2 und bis zu 0,6 besitzt,
wobei als strukturierte Materialien ein Vlies und/oder ein offenporiger Schnittschaum verwendet wird, wobei im Falle eines Vliess die Flächenmasse zwischen 100 und 1000 g/m² liegt, und
wobei die Anordnung aus verfestigter Schicht (3) und Dekorabdeckung (1) bzw. aus verfestigter Schicht (3), Dekorabdeckung (1) und Folienkaschierung (2) Flächenmassen von weniger als 2000 g/m² und die verfestigte Schicht (3) alleine eine Flächenmasse von weniger als 1100 g/m² aufweisen.

2. Verfahren zur Herstellung eines Aufbaus zur Schallisolation nach Anspruch 1,
dadurch **gekennzeichnet,**
daß man zwischen der verfestigten Schicht und der Weichschaumstoffschicht eine schaumdurchlässige Vlies-Abdeckung zum Zurückhalben locker strukturierter Materialien anordnet.

3. Verfahren zur Herstellung eines Aufbaus zur Schallisolation nach einem der Ansprüche 1 bis 2 ,
dadurch **gekennzeichnet,**
daß man zur akustischen Entkopplung von Dekorabdeckung und verfestigter Schicht eine weiche Zwischenlage zwischen diesen anordnet.

4. Verfahren zur Herstellung eines Aufbaues zur Schallisolation nach einem der Ansprüche 1 bis 3 ,
dadurch **gekennzeichnet,**
daß man die elastische Weichschaumstoffschicht mit einer adhäsive Beschichtung versieht, um eine kraftschlüssige Verbindung zwischen dem Schaum des Aufbaus und dem zu isolierenden Teil zu erreichen.

5. Verfahren zur Herstellung eines Aufbaus zur Schallisolation einem der Ansprüche 1 bis 4,
dadurch **gekennzeichnet,**
daß ein Vlies mit einer Flächenmasse von etwa 180 g/m² verwendet wird.

6. Verfahren zur Herstellung eines Aufbaus zur Schallisolation nach einem der Ansprüche 1 bis 5,
dadurch **gekennzeichnet,**
daß als Vlies ein Acrylfaservlies verwendet wird.

7. Verfahren zur Herstellung eines Aufbaus zur Schallisolation nach einem der Ansprüche 1 bis 5,
dadurch **gekennzeichnet,**
daß ein thermisch oder bindemittelverfestigtes Vlies aus Polyesterfasern, ggfl. silikonisiert, verwendet wird.

8. Verfahren zur Herstellung eines Aufbaus zur Schallisolation nach einem der Ansprüche 1 bis 5,
dadurch **gekennzeichnet,**
daß als Vlies ein Polyethylenvlies verwendet wird.

9. Verfahren zur Herstellung eines Aufbaus zur Schallisolation nach den Ansprüchen 1 bis 8,
dadurch **gekennzeichnet,**
daß man die verfestigte Schicht und die weichelastische Schaumstoffschicht dadurch herstellt, daß man beim Verschäumen ein physikalisches Treibmittel verwendet.

10. Verfahren zur Herstellung eines Aufbaus zur Schallisolation nach Anspruch 9,
dadurch **gekennzeichnet,**
daß man als physikalisches Treibmittel Methylenchlorid verwendet.

11. Verfahren zur Herstellung eines Aufbaus zur Schallisolation nach den Ansprüche 1 bis 10,
dadurch **gekennzeichnet,**
daß man die Dekorabdeckung mit einem Acrylfaservlies, einem verfestigten Polyesterfaservlies oder einem Polyethylenvlies, ggfls. mit einer entsprechenden, zur Dekorabdeckung zeigenden schaumdichten Folienkaschierung versehen, unter eine Kaschierpresse bringt, erwärmt, den Verbund in das Formwerkzeug einführt, auf eine Objekttemperatur von 160-165°C aufheizt und dann hinterschäumt.

12. Aufbau zur Schallisolation, bestehend aus einer Dekorabdeckung (1), die entweder selbst schaumdicht ist oder unmittelbar an ihrer Rückseite mit einer schaumdichten Folienkaschierung (2) versehen ist, und einer sich daran anschließenden Hinterschäumung,
insbesondere hergestellt nach dem Verfahren nach einem der Ansprüche 1 bis 12,
**dadurch gekennzeichnet,**
daß die Hinterschäumung aus einer sich an die Dekorabdeckung (1), wenn sie schaumdicht ist, bzw. an die schaumdichte Folienkaschierung (2) der Dekorabdeckung (1) anschließenden in dort vorgesehene rückseitige strukturierte Materialien hineingeschäumte zellenlose oder zellenarme verfestigte Schicht (3) aus Kunststoff und eine sich daran anschließende zellenhaltige elastische Weichschaumstoffschicht (5) aus Kunststoff besteht,
wobei sowohl der Kunststoff der verfestigten Schicht (3) als auch der Kunststoff der elastischen Weichschaumstoffschicht (5) die selbe chemische Zusammensetzung besitzen, wobei der gebildete elastische Schaum einen Verlustfaktor von mindestens 0,2 bis zu 0,6 besitzt,
wobei als strukturierte Materialien ein Vlies und/oder ein offenporiger Schnittschaum verwendet ist, wobei im Falle eines Vliess die Flächenmasse zwischen 100 und 1000 g/m² liegt, und wobei die Anordnung aus verfestigter Schicht (3) und Dekorabdeckung (1) bzw. aus verfestigter Schicht (3), Dekorabdeckung (1) und Folienkaschierung (2) Flächenmassen von weniger als 2000 g/m² und die verfestigte Schicht (3) alleine eine Flächenmasse von weniger als 1100 g/m² aufweisen.

13. Aufbau zur Schallisolation nach Anspruch 12,
dadurch **gekennzeichnet,**
daß die weichelastische Schaumstoffschicht (5) und die verfestigte Schicht (3) aus einem luftdurchlässigen bzw. offenzelligen Leichtschaum auf insbesondere Polyurethan-Zweikomponentenbasis bestehen.

14. Aufbau zur Schallisolation nach Anspruch 12 oder 13,
dadurch **gekennzeichnet,**
daß die verfestigte Schicht (3) so bestimmt ist, daß sie bei erheblich reduzierter Flächenmasse die nahezu gleiche akustische Qualität wie eine bekannte biegeweiche Schwerschicht im Feder-Masse- System aufweist.

15. Aufbau zur Schallisolation nach einem der Ansprüche 12 bis 14,
dadurch **gekennzeichnet,**
daß die verfestigte Schicht (3) biegesteif ist.

16. Aufbau zur Schallisolation nach einem der Ansprüche 12 und 14,
dadurch **gekennzeichnet,**
daß die elastische Weichschaumstoffschicht (5) eine wesentlich geringere Dichte des Schaums als eine Schaumstoffschicht in einem konventionellen Feder-Masse-System aufweist.

17. Aufbau zur Schallisolation nach einem der Ansprüche 12 bis 16,
dadurch **gekennzeichnet,**
daß ein Vlies mit einer Flächenmasse von etwa 180 mg⁻² verwendet wird.

18. Aufbau zur Schallisolation nach einem der Ansprüche 12 bis 17,
dadurch **gekennzeichnet,**
daß als Vlies ein Acrylfaservlies verwendet wird.

19. Aufbau zur Schallisolation nach einem der Ansprüche 12 bis 17,
dadurch **gekennzeichnet,**
daß ein thermisch oder bindemittelverfestigtes Vlies aus Polyesterfasern, ggfl. silikonisiert, verwendet wird.

20. Aufbau zur Schallisolation nach einem dr Ansprüche 12 bis 17,
dadurch **gekennzeichnet,**
daß als Vlies ein Polyethylenvlies verwendet wird.

21. Aufbau zur Schallisolation nach einem der Ansprüche 12 bis 20,
dadurch **gekennzeichnet,**
daß zur Formstabilität und weiteren Verarbeitbarkeit der Anordnung mit den strukturierten Materialien eine schaumdurchlässige Vlies-Abdeckung (4) zwischen diesen und der Schaumstoffschicht (5) angeordnet ist.

22. Aufbau zur Schallisolation nach einem der Ansprüche 12 bis 21,
dadurch **gekennzeichnet,**
daß zur akustischen Entkopplung der Dekorabdeckung (1) und der verfestigten Schicht (3) eine weiche Zwischenlage zwischen diesen angeordnet ist.

23. Aufbau zur Schallisolation nach einem der Ansprüche 12 bis 22,
dadurch **gekennzeichnet,**
daß der weichelastische Schaumstoff einen Verlustfaktor von mindestens 0,2 aufweist.

24. Aufbau zur Schallisolation nach einem der Ansprüche 12 bis 23,
dadurch **gekennzeichnet,**
daß die elastische Weichschaumstoffschicht (5) eine adhäsive Beschichtung (9) aufweist.

25. Verwendung des Aufbaues zur Schallisolation nach einem der Ansprüche 12 bis 24 zur Schallisolation akustischer Störstrahler.

26. Verwendung des Aufbaues zur Schallisolation nach einem dr Ansprüche 12 bis 24 zur Schallisolation in Fahrzeugen, insbesondere Kraftfahrzeugen.

27. Verwendung des Aufbaues zur Schallisolation nach einem der Ansprüche 12 bis 23 als lose und formschlüssig in ein Kraftfahrzeug eingelegter Schallisolationsteil.

28. Verwendung des Aufbaues zur Schallisolation nach einem der Ansprüche 12 bis 23 als verklebtes und formschlüssig in ein Kraftfahrzeug eingelegtes Schallisolationsteil.

29. Verwendung des Aufbaues nach einem der Ansprüche 12 bis 24 als adhäsives und formschlüssig in ein Kraftfahrzeug eingelegtes Schallisolationsteil

30. Verwendung des Aufbaues nach einem der Ansprüche 12 bis 24, zur Schallisolation von Kraftfahrzeug-Fahrgasträumen.

31. Verwendung des Aufbaues nach einem der Ansprüche 12 bis 24 zur Schallisolation von Kraftfahrzeug-Motorräumen.

## Claims

1. Method of manufacturing a construction (7) for sound insulation, in which one foam backs a semi-finished product with plastics material in a mould, the semi-finished product consisting of a decorative covering (1) which is either itself foam-tight or is provided directly at its rear side with a foam-tight foil lining (2),
characterised in that,
one provides the decorative covering (1), if it is foam tight, or the foam-tight foil lining (2) of the decorative covering (1) with structured materials on the rear side, and
in that one then foams into a closed mould, in a single working operation, for forming a cell-free or cell-poor consolidated layer (3) of plastics material for the formation of an acoustic heavy layer into the structured materials and for forming a cell-containing elastic soft foam layer (5) of plastics material adjoining thereon, for the formation of an acoustic spring, whereby for the production both of the consolidated layer (3) and the elastic soft foam layer (5) a plastics material having the same chemical composition is employed,
whereby the formed elastic foam has a loss factor of at least 0.2 and up to 0.6,
whereby a non-woven fabric and/or an open-pored cut foam is employed as structured materials, whereby in the case of a non-woven fabric the mass per unit area lies between 100 and 1000 g/m², and
whereby the arrangement of consolidated layer (3) and decorative covering (1), or of consolidated layer (3), decorative covering (1) and foil lining (2) have masses per unit area of less than 2000 g/m² and the consolidated layer (3) alone has a mass per unit area of less than 1100 g/m².

2. Method of manufacturing a construction for sound insulation according to claim 1,
characterised in that,
one arranges, between the consolidated layer and the soft foam layer, a foam penetrable non-woven covering for retaining loose structured materials.

3. Method of manufacturing a construction for sound insulation according to claim 1 or 2,
characterised in that,
for acoustic decoupling of the decorative covering and the consolidated layer, one arranges a soft intermediate layer between them.

4. Method of manufacturing a construction for sound insulation according to any of claims 1 to 3,
characterised in that,
one provides the elastic soft foam layer with an adhesive coating, in order to achieve a bonded connection between the foam of the construction and the part to be insulated.

5. Method of manufacturing a construction for sound insulation according to any of claims 1 to 4,
characterised in that,
there is employed a non-woven fabric having a mass per unit area of 180 g/m².

6. Method of manufacturing a construction for sound insulation according to any of claims 1 to 5,
characterised in that,
as non-woven fabric there is employed an acrylic fibre non-woven fabric.

7. Method of manufacturing a construction for sound insulation in accordance with any of claims 1 to 5,
characterised in that,
there is employed a non-woven fabric of polyester fibres which is consolidated thermally or by a binder, and if appropriate is silicone treated.

8. Method of manufacturing a construction for sound insulation according to any of claims 1 to 5,
characterised in that,
there is employed as non-woven fabric a polyethylene non-woven fabric.

9. Method of manufacturing a construction for sound insulation according to any of claims 1 to 8,
characterised in that,
one produces the consolidated layer and the soft elastic foam layer in that for the foaming one employs a physical foaming agent.

10. Method of manufacturing a construction for sound insulation according to claim 9,
characterised in that,
one employs methylene chloride as physical foaming agent.

11. Method of manufacturing a construction for sound insulation in accordance with any of claims 1 to 10,
characterised in that,
one brings the decorative covering, with an acrylic fibre non-woven fabric, a consolidated polyester fibre non-woven fabric or a polyethylene non-woven fabric, if appropriate with a corresponding foam-tight lining towards the decorative covering, under a lining press, effects heating, and introduces the composite into the mould tool, heats it to an object temperature of 160-165°C and then effects foam backing.

12. Construction for sound insulation, consisting of a decorative covering (1) which is either itself foam-tight or is provided directly at its rear side with a foam-tight foil lining (2), and an adjoining foam backing,
in particular manufactured in accordance with a method according to any of claims 1 to 12,
characterised in that,
the foam backing consists of a cell-free or cell-poor consolidated layer of plastics material (3) - adjoining the decorative covering (1) if it is foam-tight, or adjoining the foam-tight foil lining (2) of the decorative covering (1), foamed into structured materials provided there on the reverse side - and a cell-containing elastic soft foam layer (5) of plastics material adjoining the consolidated layer (3),
whereby both the plastics material of the consolidated layer (3) and the plastics material of the elastic soft foam layer (5) have the same chemical composition, whereby the elastic foam formed has a loss factor of at least 0.2 up to 0.6,
whereby there is employed as structured materials a non-woven fabric and/or and an open-pored cut foam, whereby in the case of a non-woven fabric the mass per unit area lies between 100 and 1000 g/m², and whereby the arrangement of the consolidated layer (3) and decorative covering (1), or of consolidated layer (3), decorative covering (1) and foil lining (2), have masses per unit area of less than 2000g/m² and the consolidated layer (3) alone has a mass per unit area of less than 1100 g/m².

13. Construction for sound insulation according to claim 12,
characterised in that,
the soft elastic foam layer (5) and the consolidated layer (3) are of an air-permeable or open-celled light foam on in particular two component polyurethane basis.

14. Construction for sound insulation according to claim 12 or 13,
characterised in that,
the consolidated layer (3) is such that with significantly reduced mass per unit area it has almost the same acoustic quality as a known soft bending heavy layer in the spring-mass-system.

15. Construction for sound insulation according to any of claims 12 to 14,
characterised in that,
the consolidated layer (3) is resistant to bending.

16. Construction for sound insulation according to either of claims 12 and 14,
characterised in that,
the elastic soft foam layer (5) has a substantially lesser density of the foam than a foam layer in a conventional spring-mass-system.

17. Construction for sound insulation according to any of claims 12 to 16,
characterised in that,
there is employed a non-woven fabric having a mass per unit area of about 180 mg⁻².

18. Construction for sound insulation according to any of claims 12 to 17,
characterised in that,
as non-woven fabric there is employed an acrylic fibre non-woven fabric.

19. Construction for sound insulation according to any of claims 12 to 17,
characterised in that,
there is employed a non-woven fabric of polyester fibres, which is consolidated thermally or by a binder, and if appropriate is silicone treated.

20. Construction for sound insulation according to any of claims 12 to 17,
characterised in that,
a polyethylene non-woven fabric is employed as non-woven fabric.

21. Construction for sound insulation according to any of claims 12 to 20,
characterised in that,
for the stability of shape, and the ability to be processed further, of the arrangement having the structured materials, there is arranged between the structured materials and the foam layer (5) a foam-penetrable non-woven fabric covering (4).

22. Construction for sound insulation according to any of claims 12 to 21,
characterised in that,
for acoustic decoupling of the decorative covering (1) and the consolidated layer (3) there is arranged between them an intermediate layer.

23. Construction for sound insulation according to any of claims 12 to 22,
characterised in that,
the soft elastic foam has a loss factor of at least 0.2.

24. Construction for sound insulation according to any of claims 12 to 23,
characterised in that,
the elastic soft foam layer (5) has an adhesive coating (9).

25. Use of the construction for sound insulation according to any of claims 12 to 24 for the sound insulation of disruptive acoustic sources.

26. Use of the construction for sound insulation in accordance with any of claims 12 to 24 for sound insulation in vehicles, in particular motor vehicles.

27. Use of the construction for sound insulation in accordance with any of claims 12 to 23 as a sound insulation part laid loose and form-fitting in a motor vehicle.

28. Use of the construction for sound insulation according to any of claims 12 to 23 as a sound insulation part laid glued and form-fitting in a motor vehicle.

29. Use of the construction according to any of claims 12 to 24 as a sound insulation part laid adhesively and form-fittingly in a motor vehicle.

30. Use of the construction according to any of claims 12 to 24 for the sound insulation of motor vehicle passenger compartments.

31. Use of the construction according to any of claims 12 to 24 for the sound insulation of motor vehicle engine compartments.

## Revendications

1. Procédé de fabrication d'une structure (7) pour l'isolation phonique, dans lequel un demi-produit, constitué d'une couverture décorative (1), qui est elle-même étanche à la mousse ou qui est directement pourvue sur sa face arrière d'une feuille de placage (2) étanche à la mousse, est raccordé dans un outil à une mousse en matière synthétique placée derrière, caractérisé en ce qu'on pourvoit la couverture décorative (1), lorsqu'elle est étanche à la mousse, ou la feuille de placage (2) étanche à la mous se de la couverture décorative (1), sur sa face arrière, de matériaux structurés et en ce qu'au cours d'une seule opération, on fait une mousse dans un moule fermé, pour former une couche (3) en matière synthétique, consolidée, sans cellules ou pauvre en cellules, pour former une couche lourde acoustique dans les matériaux structurés et pour former une couche de mousse souple (5) en matière synthétique, élastique, cellulaire, se raccordant à celle-ci, pour former un ressort acoustique, une matière synthétique de même composition chimique étant utilisée pour produire la couche consolidée (3) ainsi que la couche de mousse souple élastique (5), la mousse élastique formée possédant un facteur de perte d'au moins 0,2 et allant jusqu'à 0,6, un non-tissé et/ou une mousse de coupe à pores ouverts étant utilisé comme matériaux structurés, la masse par unité de surface dans le cas d'un non-tissé étant comprise entre 100 et 1 000 g/m² et le dispositif constitué de la couche consolidée (3) et de la couverture décorative (1) ou de la couche consolidée (3), de la couverture décorative (1) et de la feuille de placage (2) présentant des masses par unité de surface inférieures à 2 000 g/m² et la couche consolidée (3) seule présentant une masse par unité de surface inférieure à 1 100 g/m².

2. Procédé de fabrication d'une structure pour l'isolation phonique selon la revendication 1, caractérisé en ce qu'on place entre la couche consolidée et la couche de mousse souple une couverture en non-tissé perméable à la mousse pour retenir des matériaux structurés lâches.

3. Procédé de fabrication d'une structure pour l'isolation phonique sel on la revendication 1 ou 2, caractérisé en ce que pour le désaccouplage acoustique de la couverture décorative et de la couche consolidée on place entre celles-ci une couche intermédiaire souple.

4. Procédé de fabrication d'une structure pour l'isolation phonique selon l'une des revendications 1 à 3, caractérisé en ce qu'on pourvoit la couche de mousse souple élastique d'un revêtement adhésif, afin d'obtenir un assemblage par force entre la mousse de la structure et l'élément à isoler.

5. Procédé de fabrication d'une structure pour l'isolation phonique selon l'une des revendications 1 à 4, caractérisé en ce qu'on utilise un non-tissé présentant une masse par unité de surface d'environ 180 g/m².

6. Procédé de fabrication d'une structure pour l'isolation phonique selon l'une des revendications 1 à 5, caractérisé en ce qu'on utilise comme non-tissé un non-tissé de fibres acryliques.

7. Procédé de fabrication d'une structure pour l'isolation phonique selon l'une des revendications 1 à 5, caractérisé en ce qu'on utilise un non-tissé consolidé thermiquement ou par un liant en fibres de polyester, éventuellement siliconisé.

8. Procédé de fabrication d'une structure pour l'isolation phonique selon l'une des revendications 1 à 5, caractérisé en ce qu'on utilise comme non-tissé un non-tissé de polyéthylène.

9. Procédé de fabrication d'une structure pour l'isolation phonique selon les revendications 1 à 8, caractérisé en ce qu'on réalise la couche consolidée et la couche de mousse élastique et souple, en utilisant un agent moussant physique lors de la production de mousse.

10. Procédé de fabrication d'une structure pour l'isolation phonique selon la revendication 9, caractérisé en ce qu'on utilise comme agent moussant physique du chlorure de méthylène.

11. Procédé de fabrication d'une structure pour l'isolation phonique sel on les revendication 1 à 10, caractérisé en ce qu'on pourvoit la couverture décorative d'un non-tissé de fibres acryliques, d'un non-tissé de fibres de polyester consolidé ou d'un non-tissé de polyéthylène, éventuellement avec une feuille de placage correspondante, étanche à la mousse, tournée vers la couverture décorative, en ce qu'on l'amène sous une presse à plaquer, on la chauffe, on introduit le composite dans l'outil de moulage, on le chauffe à une température d'objet de 160 à 165 °C et ensuite on le transforme en mousse.

12. Structure pour l'isolation phonique, constituée d'une couverture décorative (1), qui est soit elle-même étanche à la mousse, soit est directement pourvue sur sa face arrière d'une feuille de placage (2) étanche à la mousse, et d'une mousse se raccordant derrière, fabriquée suivant le procédé selon l'une des revendications 1 à 12, caractérisée en ce que la mousse arrière est constituée d'une couche (3) en matière synthétique, consolidée, sans cellules ou pauvre en cellules, transformée en mousse dans des matériaux structurés arrière, prévus à cet endroit, se raccordant à la couverture décorative (1), lorsqu'elle est étanche à la mousse, ou à la feuille de placage (2) étanche à la mousse de la couverture décorative (1) et d'une couche de mousse élastique d'une matière synthétique (5) comportant des cellules et se raccordant là-dessus, la matière synthétique de la couche consolidée (3) ainsi que la matière synthétique de la couche de mousse souple élastique (5) possédant la même composition chimique, la mousse élastique formée possédant un facteur de perte d'au moins 0,2 à 0,6, un non-tissé et/ou une mousse de coupe à pores ouverts étant utilisé comme matériaux structurés, la masse par unité de surface dans le cas d'un non-tissé étant comprise entre 100 et 1 000 g/m² et le dispositif constitué de la couche consolidée (3) et de la couverture décorative (1) ou de la couche consolidée (3), de la couverture décorative (1) et de la feuille de placage (2) présentant des masses par unité de surface inférieures à 2 000 g/m² et la couche consol idée (3) seule présentant une masse par unité de surface inférieure à 1 100 g/m².

13. Structure pour l'isolation phonique selon la revendication 12, caractérisée en ce que la couche de mousse souple élastique (5) et la couche consolidée (3) sont constituées d'une mousse légère perméable à l'air ou à cellules ouvertes à base de deux composants, en particulier de polyuréthane.

14. Structure pour l'isolation phonique selon la revendication 12 ou 13, caractérisée en ce que la couche consolidée (3) est déterminée de manière à présenter à peu près la même qualité acoustique, pour une masse par unité de surface considérablement réduite, qu'une couche lourde souple en flexion, connue, dans le système ressort-masse.

15. Structure pour l'isolation phonique selon l'une des revendications 12 à 14, caractérisée en ce que la couche consolidée (3) est rigide en flexion.

16. Structure pour l'isolation phonique selon l'une des revendications 12 et 14, caractérisée en ce que la couche de mousse souple (5) élastique présente une densité de mousse sensiblement inférieure à une couche de mousse dans un système ressort-masse conventionnel.

17. Structure pour l'isolation phonique selon l'une des revendications 12 à 16, caractérisée en ce qu'on utilise un non-tissé d'une masse par unité de surface d'environ 180 mg⁻².

18. Structure pour l'isolation phonique selon l'une des revendications 12 à 17, caractérisée en ce qu'on utilise comme non-tissé un non-tissé de fibres acryliques.

19. Structure pour l'isolation phonique selon l'une des revendications 12 à 17, caractérisée en ce qu'on utilise un non-tissé en fibres de polyester, éventuellement siliconisé, consolidé thermiquement ou par un liant.

20. Structure pour l'isolation phonique selon l'une des revendications 12 à 17, caractérisée en ce qu'on utilise comme non-tissé un non-tissé de polyéthylène.

21. Structure pour l'isolation phonique selon l'une des revendications 12 à 20, caractérisée en ce que pour la stabilité de forme et pour la transformabilité ultérieure du dispositif avec les matériaux structurés, une couverture de non-tissé (4) perméable à la mousse est placée entre ceux-ci et la couche de mousse (5).

22. Structure pour l'isolation phonique selon l'une des revendications 12 à 21, caractérisée en ce que pour le désaccouplage acoustique de la couverture décorative (1) et de la couche consolidée (3), on place une couverture intermédiaire souple entre celles-ci.

23. Structure pour l'isolation phonique selon l'une des revendications 12 à 22, caractérisée en ce que la couche de mousse élastique souple présente un facteur de perte d'au moins 0,2.

24. Structure pour l'isolation phonique selon l'une des revendications 12 à 23, caractérisée en ce que la couche de mousse souple élastique (5) présente un revêtement adhésif (9).

25. Utilisation de la structure pour l'isolation phonique selon l'une des revendication 12 à 24 en vue de l'isolation phonique d'émetteurs acoustiques parasites.

26. Utilisation de la structure pour l'isolation phonique selon l'une des revendications 12 à 24 en vue de l'isolation phonique dans des véhicules, en particulier des véhicules automobiles.

27. Utilisation de la structure pour l'isolation phonique selon l'une des revendications 12 à 23, en tant qu'élément d'isolation phonique placé, librement et par concordance de forme, dans un véhicule.

28. Utilisation de la structure pour l'isolation phonique selon l'une des revendications 12 à 23 en tant qu'élément d'isolation phonique collé et placé par concordance de forme dans un véhicule.

29. Utilisation de la structure pour l'isolation phonique selon l'une des revendications 12 à 24, en tant qu'élément d'isolation phonique adhésif et placé par concordance de forme dans un véhicule.

30. Utilisation de la structure pour l'isolation phonique selon l'une des revendications 12 à 24 pour l'isolation phonique d'habitacles de véhicules.

31. Utilisation de la structure pour l'isolation phonique selon l'une des revendications 12 à 24, pour l'isolation phonique d'enceintes de moteurs de véhicules.
